# EUROPÄISCHE PATENTSCHRIFT

(11) **EP 1 859 066 B1**
(45) Veröffentlichungstag und Bekanntmachung des Hinweises auf die Patenterteilung: **10.02.2010**
(21) Anmeldenummer: 06708630.6
(22) Anmeldetag: 03.03.2006
(51) Int. Cl.: C14C 11/00, C14C 13/00, D06N 3/00

(54) **MATRIZE MIT KLEINEN NÄPFCHENARTIGEN VERTIEFUNGEN**
DIE COMPRISING SMALL CUP-TYPE DEPRESSIONS
MATRICE POURVUE DE PETITES CAVITES CUPULIFORMES

(30) Priorität: 04.03.2005 AT 1312005 U; 04.03.2005 DE 202005003532 U
(43) Veröffentlichungstag der Anmeldung: 28.11.2007
(73) Patentinhaber: BASF SE, 67056 Ludwigshafen (DE)
(72) Erfinder: SCHÄFER, Philipp, 30519 Hannover (DE)
(86) Internationale Anmeldenummer: PCT/EP2006/060441
(87) Internationale Veröffentlichungsnummer: WO 2006/092440

(56) Entgegenhaltungen:
- EP-A- 1 063 071
- DE-A1- 3 004 327
- DE-A1- 19 510 240

## Beschreibung

Die vorliegende Erfindung betrifft eine Matrize für die Herstellung einer mit einem flächigen Träger, insbesondere einem Leder oder einem Textilmaterial, wie einem Vlies, Gewebe oder Gewirke, verbindbaren Beschichtung, die durch Auftragen einer Kunststoffdispersion auf die aus hydrophobem flexiblem Kunststoff bestehende Oberfläche der Matrize und anschließender Verfestigung der flüssigen Kunststoffdispersion gebildet wird.

Es ist bekannt, die Oberseite eines Leders, und zwar insbesondere eines an seiner Narbenseite angeschliffenen Narbenleders, aber auch eines Spaltleders, sowie eines Textilmaterials, mit einer eine Narbenstruktur aufweisenden Beschichtung zu versehen, damit die Sichtseite derselben die erforderlichen Eigenschaften aufweist und ein lederähnliches Aussehen besitzt. Dazu wird eine Beschichtung bzw. Zurichtung zunächst gesondert auf einer Unterlage hergestellt, die eine der Narbenstruktur der herzustellenden Zurichtung entsprechende strukturierte Oberfläche aufweist, und anschließend mit dem Träger verbunden. Bei der Herstellung dieser Zurichtung wird eine Kunststoffdispersion auf die aus hydrophobem Material bestehenden Oberfläche der Matrize aufgetragen und anschließend durch Wärmezufuhr verfestigen gelassen. Soll die Zurichtung ein velours- bzw. samtartiges Aussehen besitzen, so hat man bereits vorgeschlagen, für die Herstellung dieser Zurichtung eine Matrize zu verwenden, deren Oberfläche eine Struktur aufweist, die der velours- bzw. samtartigen Struktur der herzustellenden Zurichtung entspricht. Diese Oberfläche der Matrize kann dabei beispielsweise durch Abformen der Sichtseite eines vorhandenen Nubukleders gebildet werden. Derart hergestellte Zurichtungen weisen den Nachteil auf, dass die den Velourseffekt bildenden Fasern sich bereits bei sehr geringem Druck umbiegen und in dieser Position bleiben, bis sie wieder mechanisch aufgerichtet bzw. in eine andere Lage gebracht werden.

DE 30 04 327 offenbart ein Verfahren zur Herstellung eines Flächengebildes von Velourslederimitaten mit Hilfe von Matrizen, in die Näpfchen eingearbeitet wurden, beschreibt aber weder den Mittenabstand von benachbarten Näpfchen noch die Herstellung der Matrizen.

Die vorliegende Erfindung hat sich zur Aufgabe gestellt, eine Matrize für die Herstellung einer Zurichtung bzw. Beschichtung zu schaffen, die ein sehr schönes velours- bzw. samtartiges Aussehen besitzt, wobei die veloursartige Oberfläche vor allem auch nach Belastung ihr Aussehen nicht verändert. Dabei spricht man von Beschichtung im Zusammenhang mit Textil und von Zurichtung im Zusammenhang mit Leder.

Zur Lösung dieser Aufgabe schlägt die Erfindung vor, dass die Oberfläche der Matrize einen Glanzgrad nach DIN 67530 bei einem Einstrahlwinkel von 60° von weniger als 2,2 aufweist und mit mikroskopisch kleinen, d.h. mit bloßem Auge unsichtbaren, näpfchenartigen Vertiefungen versehen ist. Nach dem Verfestigen der in diese näpfchenartigen Vertiefungen eingedrungenen flüssigen Kunststoffdispersion bilden sich in diesen Vertiefungen, welche mit freiem Auge nicht erkennbar sind, sondern nur bei starker Vergrößerung, beispielsweise 1:25 oder 1:50, sichtbar werden, feine, einzelne abstehende, sich nicht gegenseitig beeinflussende Härchen, zwischen welchen Freiräume freigehalten sind, sodass durch die Anordnung der näpfchenartigen Vertiefungen in Verbindung mit der matten Oberfläche der Matrize eine kurzfaserige, samtartige Sichtseite der Beschichtung geschaffen wird, bei welcher auch zwischen den Härchen keine störenden glänzenden Stellen vorhanden sind, und sichergestellt wird, dass sich nach Druckentlastung die Härchen wieder aufrichten und somit ein formschönes veloursartiges Aussehen der Beschichtung ohne zusätzliche Maßnahmen erhalten bleibt. Ein weiterer Vorteil einer mit der erfindungsgemäßen Matrize gebildeten Beschichtung besteht darin, dass ein zwischen den Härchen eindringender Schmutz wieder auf einfache Weise entfernt werden kann, da er sich nicht in einem Fasergewirr festsetzen kann, wie dies bei bekannten Ausführungen der Fall ist. Bei Kunststoffdispersionen bzw. flüssigen Kunststoffdispersionen handelt es sich im Rahmen der vorliegenden Erfindung vorzugsweise um wässrige Kunststoffdispersionen.

Der Glanzgrad wird mittels eines handelsüblichen Reflektometers nach DIN 67530 bestimmt. Dabei wird ein von einer Lichtquelle ausgesandter Lichtstrahl unter einen bestimmten Einstrahlwinkel auf die Oberfläche des Objektes, dessen Glanzgrad bestimmt werden soll, gerichtet und die Intensität des von dieser Oberfläche reflektierten Lichtes gemessen Diese Intensität hängt sowohl vom gewählten Einstrahlwinkel als auch vom Material, aus welchen die Oberfläche besteht, insbesondere vom Farbton dieser Oberfläche, ab. Bei dunkler Oberfläche dringt ein Teil des auf die Oberfläche auftreffenden Lichtstrahles in das Material ein und wird dort, in Abhängigkeit vom Farbton, zum Teil absorbiert, bei heller Oberfläche wird die Reflexion größer. Außerdem wird mit zunehmendem Einstrahlwinkel mehr Licht reflektiert.

Bei der erfindungsgemäßen Bestimmung des Glanzgrades wurde ein Einstrahlwinkel von 60° gewählt, damit der Lichtstrahl auch in die näpfchenartigen Vertiefungen eindringt und daher auch diese bei der Glanzgradbestimmung berücksichtigt werden.

Wie erwähnt, führen verschiedene Farbtöne der Matrizenoberfläche zu unterschiedlichen Glanzgradwerten. Erfindungsgemäß soll eine Matrize mit heller Oberfläche, beispielsweise mit einer Oberfläche aus hellgrauem Silikonkautschuk oder aus hellem Polypropylen, einen Glanzgrad unter 2,2, vorzugsweise unter 1,8, und eine Matrize mit dunkler Oberfläche, beispielsweise einer Oberfläche aus dunkelrotem Silikonkautschuk oder aus dunkelgrauem Polypropylen, einen Glanzgrad unter 1,2, vorzugsweise unter 0,7, aufweisen.

Die Farbmessung der Matrizenoberfläche wird nach ISO 7724 im CIELAB System mit einem Spektralfotometer, Messgeometrie 45/0 und unter 10° Beobachter bei Normallicht D 65 bestimmt. Matrizen mit heller Oberfläche weisen auf der ΔL-Achse einen Wert über 50, Matrizen mit dunkler Oberfläche weisen auf der ΔL-Achse einen Wert unter 50 auf.

Zweckmäßig besteht die Matrize aus zumindest zwei Schichten, wobei die Oberfläche der obersten, die näpfchenartigen Vertiefungen aufweisenden Schicht aus einem hydrophoben flexiblen Kunststoff gebildet ist. Hydrophobe flexible Kunststoffe werden so gewählt, dass sie einerseits in wässriger Dispersion angewandt werden und Filme bilden können. Andererseits müssen hydrophobe flexible Kunststoffe so gewählt werden, dass die gebildeten Filme sich zerstörungsfrei von der erfindungsgemäßen Matrize ablösen lassen, und zwar vorzugsweise ohne dass man mit Trennmittel arbeitet. Bevorzugte Beispiele für hydrophobe flexible Kunststoffe sind also vorzugsweise aus Polypropylen, Silikonharz, Silikonkautschuk oder einem Fluorpolymerisat besteht, worunter ein Polymerisat von fluorhaltigen Monomeren zu verstehen ist, insbesondere Polytetrafluorethylen. Die letztgenannten Materialien sind besonders für die Herstellung der Beschichtung aus einer Kunststoffdispersion geeignet und weisen den Vorteil auf, dass sich die verfestigte Beschichtung leicht von der mit den näpfchenartigen Vertiefungen versehenen Oberfläche der Matrize ablösen lässt. Unterhalb dieser obersten Schicht ist vorzugsweise eine Trägerschicht angeordnet, die aus einem Textilmaterial, wie einem Gewebe, Gewirke oder Vlies, oder aus Papier besteht. Es kann aber unterhalb der obersten Schicht auch eine aus Metall bestehende Schicht angeordnet sein, welche bei der Herstellung der Beschichtung zusätzlich als Wärmespeicher dient und das Verfestigen der flüssigen Kunststoffdispersion zur Bildung der Beschichtung bzw. Zurichtung begünstigt. Diese aus Metall bestehende Schicht kann anstelle der aus Textilmaterial oder aus Papier bestehenden Trägerschicht oder zusätzlich zu dieser Trägerschicht vorgesehen sein.

Es können aber auch die näpfchenartigen Vertiefungen in einer Trägerschicht angeordnet sein, die von einer die Oberseite bildenden und die näpfchenartigen Vertiefungen auskleidenden, aus hydrophobem Kunststoffmaterial bestehenden Schicht überzogen ist.

Die Gesamtdicke der Matrize beträgt zwischen 0,6 mm und 4,8 mm, kann jedoch insbesondere bei Anordnung einer aus Metall bestehenden Schicht auch größer sein.

Die näpfchenartigen Vertiefungen in der Oberfläche der Matrize können auf einfache Weise durch eine, vorzugsweise computergesteuerte, Laserbehandlung dieser Oberfläche gebildet sein. Es können aber diese näpfchenartigen Vertiefungen beim Herstellen der Matrize auch durch Abformen von einer entsprechenden Negativform gebildet sein. Dabei wird so vorgegangen, dass durch Abformen der Härchen aufweisenden Oberfläche eines Trägers eine Zwischenform gebildet und durch Abformen der Oberfläche dieser Zwischenform eine Negativform hergestellt wird, aus welcher die mit den näpfchenartigen Vertiefungen versehene Oberfläche der Matrizen geformt wird.

Die näpfchenartigen Vertiefungen können jeden beliebigen Querschnitt aufweisen, also beispielsweise auch polygonal ausgebildet sein. Vorzugsweise besitzen diese näpfchenartigen Vertiefungen einen runden, beispielsweise kreisförmigen oder ovalen Querschnitt, durch welchen auch das Entformen der auf der Matrize gebildeten Beschichtung erleichtert wird. Demselben Zweck dient es, wenn die näpfchenartigen Vertiefungen einen sich zum Boden derselben verjüngenden Querschnitt aufweisen. Außerdem entstehen bei der letztgenannten Formgebung der näpfchenartigen Vertiefungen auf der Sichtseite der Beschichtung sich zur Spitze hin verjüngende Härchen, was das Entfernen der zwischen den Härchen befindlichen Verunreinigungen erleichtert.

Optimal ist es, wenn der Mittenabstand (a) benachbarter näpfchenartiger Vertiefungen zwischen 50 µm und 150µm, vorzugsweise zwischen 60 µm und 90 µm, und die Tiefe (t) der näpfchenartigen Vertiefungen zwischen 50 µm und 150 µm, vorzugsweise zwischen 60 µm und 90 µm, beträgt

Der Boden der näpfchenartigen Vertiefungen ist zweckmäßig abgerundet ausgebildet, vorzugsweise konkav oder konvex geformt, wodurch die Haptik und das veloursartige Aussehen der in diesen näpfchenartigen Vertiefungen geformten Härchen der Beschichtung verbessert werden.

Wie bekannt, kann die Matrize plattenförmig oder bahnförmig ausgebildet sein, wobei die im letzteren Fall die Matrize die Form einer umlaufenden Bahn haben kann.

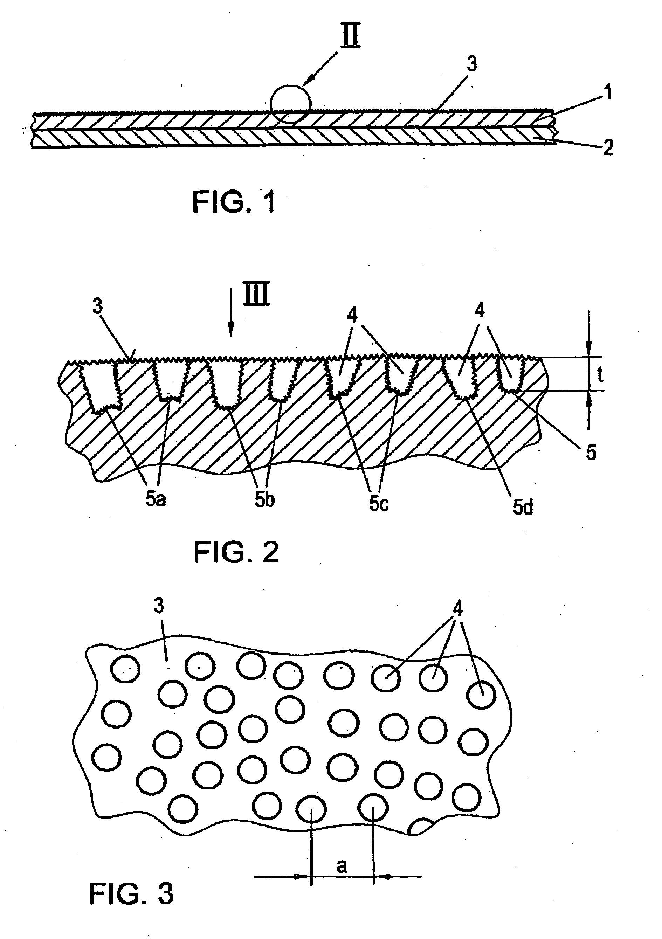

In der Zeichnung ist die Erfindung anhand eines Ausführungsbeispieles schematisch erläutert. Fig. 1 zeigt einen Querschnitt durch eine erfindungsgemäße Matrize, etwa in natürlicher Größe. Fig. 2 stellt , sehr stark vergrößert, den Ausschnitt II von Fig. 1 mit den näpfchenartigen Vertiefungen dar, und Fig. 3 zeigt eine Draufsicht in Richtung des Pfeiles III in Fig. 2.

Die in Fig. 1 im Querschnitt dargestellte Matrize weist eine aus einem hydrophoben Kunststoffmaterial bestehende Schicht 1 und eine Trägerschicht 2 auf. Die Schicht 1 besteht vorzugsweise aus Polypropylen, Silikonharz, Silikonkautschuk oder einem Fluorpolymerisat, insbesondere Polytetrafluorethylen und ist an ihrer matten Oberfläche 3 mit mikroskopisch kleinen näpfchenartigen Vertiefungen 4 versehen, die in Fig. 2 stark vergrößert dargestellt sind. Besteht die Oberfläche 3 aus einem hellen Material, beispielsweise aus hellgrauem Silikonkautschuk, so weist sie einen Glanzgrad nach DIN 67530 bei einem Einstrahlwinkel von 60° unter 2,2 auf, besteht sie aus einem dunklen Material, wie beispielsweise dunkelrotem Silikonkautschuk, so weist sie einen Glanzgrad nach DIN 67530 bei einem Einstrahlwinkel von 60° unter 1,2 auf.

Die Trägerschicht 2 besteht aus einem Textilmaterial, insbesondere einem Gewebe, Gewirke oder Vlies, oder aus Papier. Es kann aber auch, anstelle der Trägerschicht 2 oder zusätzlich zu dieser an deren Unterseite, eine aus Metall bestehende, nicht dargestellte Schicht vorgesehen sein. Weiters kann die Trägerschicht 2 die näpfchenartigen Vertiefungen 4 aufweisen, wobei dann die Schicht 1 von einem dünnen Überzug der Trägerschicht 2 aus einem hydrophoben Kunststoffmaterial gebildet ist, mit dem auch die näpfchenartigen Vertiefungen 4 ausgekleidet sind. In jedem Fall sind sowohl die Oberfläche 3 der Matrize als auch die Wände der näpfchenartigen Vertiefungen 4 matt ausgebildet.

Wie aus Fig. 2 hervorgeht, in welcher die näpfchenartigen Vertiefungen 4 in sehr stark vergrößertem Maßstab im Querschnitt dargestellt sind, weisen die näpfchenartigen Vertiefungen 4 einen sich zum Boden 5 verjüngenden Querschnitt auf. Die Tiefe (t) der näpfchenartigen Vertiefungen 4 ist unterschiedlich und beträgt vorzugsweise zwischen 60 µm und 90 µm. In Fig. 2 sind weiters verschiedene Möglichkeiten der Ausbildung des Bodens 5 der näpfchenartigen Vertiefungen 4 dargestellt. Bei 5a ist dieser Boden konvex geformt, bei 5b konkav, bei 5c mit Abstufungen versehen und bei 5d eben.

Die Wände der näpfchenartigen Vertiefungen 4 können auch mit Längsriefen oder mit gedrillt verlaufenden Riefen versehen sein

Wie aus Fig. 3 hervorgeht, weisen beim dargestellten Ausführungsbeispiel die näpfchenartigen Vertiefungen 4 einen kreisförmigen Querschnitt mit einem Kreisdurchmesser bis zu 25 µm auf. Sie können aber auch jeden anderen beliebigen Querschnitt, insbesondere einen ovalen oder einen polygonalen Querschnitt besitzen. Der Mittenabstand a benachbarter näpfchenartiger Vertiefungen ist in der Regel unterschiedlich und beträgt vorzugsweise zwischen 50 µm und 150 µm. Die näpfchenartigen Vertiefungen 4 sind beim dargestellten Ausführungsbeispiel auf der Oberfläche 3 unregelmäßig angeordnet, können aber auch in Form eines regelmäßigen Musters vorgesehen sein.

Die Matrize selbst kann als Platte oder auch als vorzugsweise umlaufende Bahn ausgebildet sein.

Bei der Herstellung einer Beschichtung bzw. Zurichtung, die in der Folge mit einem flächigen Träger, wie einem Leder oder einem Textilmaterial verbunden wird, auf der erfindungsgemäßen Matrize wird so vorgegangen, dass man zunächst ein flüssiges Kunststoffmaterial auf die mit den näpfchenartigen Vertiefungen 4 versehene Oberfläche 3 aufträgt und verfestigen lässt, worauf die so gebildete Beschichtung von der Matrize abgezogen wird. Durch die Anordnung der näpfchenartigen Vertiefungen 4 entstehen auf der Beschichtung bzw. Zurichtung feine, einzeln abstehende und voneinander im Abstand angeordnete Härchen, die der Beschichtung ein nubuk- bzw. samtartiges Aussehen verleihen.

Ein weiterer Gegenstand der vorliegenden Erfindung ist somit ein Verfahren zur Herstellung einer Beschichtung von Textilmaterial unter Verwendung einer erfindungsgemäßen Matrize.

Ein weiterer Gegenstand ist somit weiterhin ein Verfahren zur Herstellung einer folienartigen Zurichtung von Leder unter Verwendung einer erfindungsgemäßen Matrize.

Weitere Gegenstände der vorliegenden Erfindung sind somit beschichtete Textilmaterialien und zugerichtete Leder, hergestellt nach dem vorstehend charakterisierten erfindungsgemäßen Verfahren. Erfindungsgemäße beschichtete Textilmaterialien und zugerichtete Leder haben ein schönes veloursartiges oder nubuk- oder samtartiges Aussehen.

## Patentansprüche

1. Matrize für die Herstellung einer mit einem flächigen Träger verbindbaren Beschichtung, die durch Auftragen einer flüssigen Kunststoffdispersion auf die aus einem hydrophoben, flexiblen Kunststoff bestehende Oberfläche der Matrize und anschließendem Verfestigen der Kunststoffdispersion gebildet wird, **dadurch gekennzeichnet, dass** die Oberfläche (3) einen Glanzgrad nach DIN 67530 bei einem Einstrahlwinkel von 60° von weniger als 2,2 aufweist und mit mikroskopisch kleinen näpfchenartigen Vertiefungen (4) versehen ist, die durch eine Laserbehandlung von Oberfläche (3) gebildet sind, und dass der Mittenabstand (a) benachbarter näpfchenartiger Vertiefungen (4) zwischen 50 µm und 150 µm und die Tiefe (t) der näpfchenartigen Vertiefungen (4) zwischen 50 µm und 150 µm beträgt.

2. Matrize nach Anspruch 1, **dadurch gekennzeichnet, dass** flächige Träger aus Leder und Textilmaterial gewählt werden.

3. Matrize nach Anspruch 2, **dadurch gekennzeichnet, dass** Textilmaterial gewählt wird aus Vliesen, Geweben und Gewirken.

4. Matrize nach einem der Ansprüche 1 bis 3, **dadurch gekennzeichnet, dass** eine helle Oberfläche (3) einen Glanzgrad unter 2,2 und eine dunkle Oberfläche (3) einen Glanzgrad unter 1,2 aufweist

5. Matrize nach einem der Ansprüche 1 bis 4, **dadurch gekennzeichnet, dass** sie aus zumindest zwei Schichten (1, 2) besteht, wobei die oberste, die näpfchenartigen Vertiefungen (4) aufweisende Schicht (1) aus dem flexiblen Kunststoff gebildet ist.

6. Matrize nach einem der Ansprüche 1 bis 3 und 5, **dadurch gekennzeichnet, dass** unterhalb der obersten Schicht (1) eine Trägerschicht (2) angeordnet ist, die aus einem Textilmaterial oder aus Papier besteht.

7. Matrize nach einem der Ansprüche 1 bis 6, **dadurch gekennzeichnet, dass** unterhalb der obersten Schicht (1) eine aus Metall bestehende Schicht angeordnet ist.

8. Matrize nach einem der Ansprüche 1 bis 7, **dadurch gekennzeichnet, dass** die näpfchenartigen Vertiefungen (4) in einer Trägerschicht angeordnet sind, die von einer die Oberfläche (3) bildenden und die näpfchenartigen Vertiefungen (4) auskleidenden, aus hydrophobem Kunststoffmaterial bestehenden Schicht überzogen ist.

9. Matrize nach einem der Ansprüche 1 bis 8, **dadurch gekennzeichnet, dass** die Oberfläche (3) aus Polypropylen, Silikonharz, Silikonkautschuk oder einem Fluorpolymerisat besteht.

10. Matrize nach einem der Ansprüche 1 bis 9, **dadurch gekennzeichnet, dass** die Laserbehandlung der Oberfläche (3) computergesteuert ist..

11. Matrize nach einem der Anspräche 1 bis 10, **dadurch gekennzeichnet, dass** die näpfchenartigen Vertiefungen (4) bei der Herstellung der Matrize durch Abformen von einer Negativform gebildet sind.

12. Matrize nach einem der Ansprüche 1 bis 11, **dadurch gekennzeichnet, dass** die näpfchenartigen Vertiefungen (4) einen runden, beispielsweise kreisförmigen oder ovalen, Querschnitt aufweisen.

13. Matrize nach einem der Ansprüche 1 bis 12, **dadurch gekennzeichnet, dass** die näpfchenartigen Vertiefungen (4) einen sich zum Boden (5) derselben verjüngenden Querschnitt aufweisen.

14. Matrize nach einem der Ansprüche 1 bis 13 **dadurch gekennzeichnet, dass** der Mittenabstand (a) benachbarter näpfchenartiger Vertiefungen (4) zwischen 60 µm und 90 µm beträgt.

15. Matrize nach einem der Ansprüche 1 bis 14, **dadurch gekennzeichnet, dass** die Tiefe (t) der näpfchenartigen Vertiefungen (4) zwischen 60 µm und 90 µm beträgt.

16. Matrize nach einem der Ansprüche 1 bis 15, **dadurch gekennzeichnet, dass** der Boden der näpfchenartigen Vertiefungen (4) abgerundet ausgebildet, vorzugsweise konkav oder konvex geformt, ist.

17. Matrize nach einem der Ansprüche 1 bis 16, **dadurch gekennzeichnet, dass** sie plattenförmig oder bahnförmig ausgebildet ist.

18. Verfahren zur Herstellung einer Beschichtung von Textilmaterial unter Verwendung einer Matrize nach einem der Ansprüche 1 bis 17.

19. Verfahren zur Herstellung einer folienartigen Zurichtung von Leder unter Verwendung einer Matrize nach einem der Ansprüche 1 bis 18.

## Claims

1. A die for the production of a coating which can be bonded to a sheet-like substrate and is formed by application of a liquid plastic dispersion to the die surface consisting of a hydrophobic, flexible plastic and subsequent solidification of the plastic dispersion, wherein the surface (3) has a gloss of less than 2.2 according to DIN 67530 at an angle of incidence of 60° and is provided with microscopically small well-like indentations (4) which are formed by laser treatment of surface (3), and wherein the center-to-center distance (a) of adjacent well-like indentations (4) is from 50 µm to 150 µm and the depth (t) of the well-like indentations (4) is from 50 µm to 150 µm.

2. The die according to claim 1, wherein sheet-like substrates are selected from leather and textile materials.

3. The die according to claim 2, wherein textile material is selected from nonwovens, woven fabrics and knitted fabrics.

4. The die according to any of claims 1 to 3, wherein a light surface (3) has a gloss of less than 2.2 and a dark surface (3) has a gloss of less than 1.2.

5. The die according to any of claims 1 to 4, which consists of at least two layers (1, 2), the uppermost layer (1) having the well-like indentations (4) being formed from the flexible plastic.

6. The die according to any of claims 1 to 3 and 5, wherein a substrate layer (2) which consists of textile material or of paper is arranged below the uppermost layer (1).

7. The die according to any of claims 1 to 6, wherein a layer consisting of metal is arranged below the uppermost layer (1).

8. The die according to any of claims 1 to 7, wherein the well-like indentations (4) are arranged in a substrate layer which is covered by a layer forming the surface (3), lining the well-like indentations (4) and consisting of hydrophobic plastic material.

9. The die according to any of claims 1 to 8, wherein the surface (3) consists of polypropylene, silicone resin, silicone rubber or a fluoropolymer.

10. The die according to any of claims 1 to 9, wherein the laser treatment of the surface (3) is computer-controlled.

11. The die according to any of claims 1 to 10, wherein the well-like indentations (4) are formed during the production of the die by casting from a negative mold.

12. The die according to any of claims 1 to 11, wherein the well-like indentations (4) have a round, for example circular or oval, cross section.

13. The die according to any of claims 1 to 12, wherein the well-like indentations (4) have a cross section tapering toward the bottom (5) thereof.

14. The die according to any of claims 1 to 13, wherein the center-to-center distance (a) of adjacent well-like indentations (4) is from 60 µm to 90 µm.

15. The die according to any of claims 1 to 14, wherein the depth (t) of the well-like indentations (4) is from 60 µm to 90 µm.

16. The die according to any of claims 1 to 15, wherein the bottom of the well-like indentations (4) is rounded, preferably concave or convex.

17. The die according to any of claims 1 to 16, which is sheet-like or web-like.

18. A method for the production of a coating of textile material using a die according to any of claims 1 to 17.

19. A method for the production of a film-like finish of leather using a die according to any of claims 1 to 18.

## Revendications

1. Matrice pour la réalisation d'un revêtement qui est apte à être relié à un support plat qui est formé par application d'une dispersion liquide de matière synthétique sur la surface de la matrice constituée d'une matière synthétique hydrophobe et flexible, et ensuite par solidification de la dispersion de matière synthétique,
**caractérisée en ce que**
la surface (3) présente un degré de brillant selon DIN 67530 de moins de 2,2 sous un angle d'éclairage de 60° et est dotée de petits creux microscopiques (4) en forme de cuvette qui sont formés par traitement de la surface (3) au laser, **en ce que** la distance moyenne (a) entre des creux (4) voisins en forme de cuvette est comprise entre 50 µm et 150 µm et **en ce que** la profondeur (t) des creux (4) en forme de cuvette est comprise entre 50 µm et 150 µm.

2. Matrice selon la revendication 1, **caractérisée en ce que** l'on sélectionne des supports plats en cuir ou en matériau textile.

3. Matrice selon la revendication 2, **caractérisée en ce que** le matériau textile est sélectionné parmi les feutres, les tissus et les tricots.

4. Matrice selon l'une des revendications 1 à 3, **caractérisée en ce qu'**une surface claire (3) présente un degré de brillant inférieur à 2,2 et une surface sombre (3) un degré de brillant inférieur à 1,2.

5. Matrice selon l'une des revendications 1 à 4, **caractérisée en ce qu'**elle est constituée d'au moins deux couches (1, 2), la couche supérieure (1) qui présente les creux (4) en forme de cuvette étant formée de la matière synthétique flexible.

6. Matrice selon l'une des revendications 1 à 3 et 5, **caractérisée en ce qu'**une couche de support (2) constituée d'un matériau textile ou de papier est disposée en dessous de la couche supérieure (1).

7. Matrice selon l'une des revendications 1 à 6, **caractérisée en ce qu'**une couche constituée de métal est disposée en dessous de la couche supérieure (1).

8. Matrice selon l'une des revendications 1 à 7, **caractérisée en ce que** les creux (4) en forme de cuvette sont disposées dans une couche de support qui est recouverte par une couche constituée d'une matière synthétique hydrophobe qui forme la surface (3) et qui habille les creux (4) en forme de cuvette.

9. Matrice selon l'une des revendications 1 à 8, **caractérisée en ce que** la surface (3) est constituée de polypropylène, de résine de silicone, de caoutchouc silicone ou d'un polymère fluoré.

10. Matrice selon l'une des revendications 1 à 9, **caractérisé en ce que** le traitement au laser de la surface (3) est commandé par ordinateur.

11. Matrice selon l'une des revendications 1 à 10, **caractérisée en ce que** lors de la fabrication de la matrice, les creux (4) en forme de cuvette sont formés par moulage sur un moule négatif.

12. Matrice selon l'une des revendications 1 à 11, **caractérisée en ce que** les creux (4) en forme de cuvette ont une coupe transversale arrondie, par exemple circulaire ou ovale.

13. Matrice selon l'une des revendications 1 à 12, **caractérisée en ce que** la section transversale des creux (4) en forme de cuvette se rétrécit en direction de leur fond (5).

14. Matrice selon l'une des revendications 1 à 13, **caractérisée en ce que** la distance moyenne (a) entre des creux (4) voisins en forme de cuvette est comprise entre 60 µm et 90 µm.

15. Matrice selon l'une des revendications 1 à 14, **caractérisée en ce que** la profondeur (t) des creux (4) en forme de cuvette est comprise entre 60 µm et 90 µm.

16. Matrice selon l'une des revendications 1 à 15, **caractérisée en ce que** le fond des creux (4) en forme de cuvette est arrondi et présente de préférence une forme concave ou convexe.

17. Matrice selon l'une des revendications 1 à 16, **caractérisée en ce qu'**elle a la forme d'une plaque ou d'une bande.

18. Procédé de réalisation d'un revêtement d'un matériau textile par recours à une matrice selon l'une des revendications 1 à 17.

19. Procédé de réalisation d'un corroyage de cuir en feuille par recours à une matrice selon l'une des revendications 1 à 18.
